# EUROPÄISCHE PATENTSCHRIFT

(11) **EP 2 568 334 B1**
(45) Veröffentlichungstag und Bekanntmachung des Hinweises auf die Patenterteilung: **14.05.2014**
(21) Anmeldenummer: 11007232.9
(22) Anmeldetag: 06.09.2011
(51) Int. Cl.: G03B 42/04, G03B 42/08, G01T 1/20

(54) **Vorrichtung und System zum Auslesen von in Speicherleuchtstoffplatten gespeicherten Röntgeninformationen sowie Speicherleuchtstoffplatte**
Device and system for reading out x-ray information stored in storage phosphor plates and luminescent material storage plate
Dispositif et système destinés à la lecture d'informations radiographiques stockées dans des plaques fluorescentes de mémoire ainsi que plaque fluorescente de mémoire

(43) Veröffentlichungstag der Anmeldung: 13.03.2013
(73) Patentinhaber: Agfa HealthCare, 2640 Mortsel (BE)
(72) Erfinder: Von Stein, Florian, 82284 Grafrath (DE); Backhaus, Heinz, 86529 Schrobenhausen (DE)
(74) Vertreter: Linsmeier, Josef

(56) Entgegenhaltungen:
- EP-A1- 0 347 647
- EP-A1- 1 895 364
- EP-A2- 0 866 361
- DE-A1- 2 621 120
- DE-C1- 4 021 660
- FI-A- 911 433
- JP-A- 2010 049 057
- US-A- 5 210 416

## Beschreibung

Die vorliegende Erfindung betrifft eine Vorrichtung und ein System zum Auslesen von in Speicherleuchtstoffplatten gespeicherten Röntgeninformationen sowie eine Speicherleuchtstoffplatte gemäß dem Oberbegriff der unabhängigen Ansprüche.

Eine Möglichkeit zur Aufzeichnung von Röntgenbildern besteht darin, die durch ein Objekt, beispielsweise einen Patienten, hindurch tretende Röntgenstrahlung als latentes Bild in einer sogenannten Speicherleuchtstoffplatte zu speichern. Zum Auslesen des latenten Bildes wird die Speicherleuchtstoffplatte mit Stimulationslicht bestrahlt und dabei zur Aussendung von Emissionslicht angeregt. Das Emissionslicht, dessen Intensität dem in der Speicherleuchtstoffplatte gespeicherten Bild entspricht, wird von einem optischen Detektor erfasst und in elektrische Signale umgewandelt. Die elektrischen Signale werden nach Bedarf weiterverarbeitet und schließlich für eine Auswertung, insbesondere zu medizinischdiagnostischen Zwecken, bereitgestellt, indem sie an einem entsprechenden Ausgabegerät, wie z. B. einem Monitor und/oder Drucker, ausgegeben werden.

In Vorrichtungen und Systemen nach dem Stand der Technik, wie z.B. EP 1 895 364 A1, werden Speicherleuchtstoffplatten meist mit Hilfe von rotierenden Walzenpaaren relativ zur Ausleseeinrichtung befördert. JP 2010 049057 A zeigt einen Strahlungsbildleser mit einer rotierenden Antriebswalze, die eine Magnetschicht der Speicherleuchtstoffplatte mittels magnetischer Kräfte anzieht.

Es ist Aufgabe der Erfindung, eine Vorrichtung und ein System zum Auslesen von in Speicherleuchtstoffplatten gespeicherten Röntgeninformationen sowie eine entsprechende Speicherleuchtstoffplatte anzugeben, welche bzw. welches bei einfachem Aufbau einen möglichst zuverlässigen Transport der Speicherleuchtstoffplatte gewährleistet.

Diese Aufgabe wird durch die Vorrichtung, das System bzw. die Speicherleuchtstoffplatte gemäß den unabhängigen Ansprüchen gelöst.

Die erfindungsgemäße Vorrichtung umfasst eine Ausleseeinrichtung zum Bestrahlen der Speicherleuchtstoffplatte mit Stimulationslicht und zum Erfassen von hierbei in der Speicherleuchtstoffplatte angeregtem Emissionslicht sowie eine Beförderungseinrichtung zur Beförderung der Speicherleuchtstoffplafte mit mindestens einer Walze, welche in Rotation um ihre Rotationsachse versetzt werden kann, und zeichnet sich dadurch aus, dass im Inneren der als Hohlkörper, insbesondere als Hohlzylinder, ausgebildeten Walze ein oder mehrere Magnete angeordnet sind.

Das erfindungsgemäße System umfasst neben der erfindungsgemäßen Vorrichtung eine Speicherleuchtstoffplatte mit einer Trägerschicht und einer auf der Trägerschicht befindlichen Speicherleuchtstoffschicht, wobei zumindest ein Teilbereich der Trägerschicht der Speicherleuchtstoffplatte ferromagnetisch ist.

Die erfindungsgemäße Speicherleuchtstoffplatte umfasst eine Trägerschicht sowie eine auf der Trägerschicht befindliche Speicherleuchtstoffschicht und ist dadurch gekennzeichnet, dass die Trägerschicht der Speicherleuchtstoffplatte eine ferromagnetische Schicht sowie zwei nicht-ferromagnetische Schichten, insbesondere zwei Kunststoffschichten, aufweist, wobei die ferromagnetische Schicht zwischen den beiden nicht-ferromagnetischen Schichten liegt.

Die Erfindung basiert auf dem Gedanken, zur Beförderung der Speicherleuchtstoffplatte eine hohle Walze vorzusehen, in deren Inneren ein oder mehrere Magnete so angeordnet sind, dass diese während einer Rotation der Walze eine vorgegebene räumliche Position beibehalten und insbesondere nicht der Rotationsbewegung der Walze folgen. Der Walzenhohlkörper selbst ist hierbei nicht magnetisch, insbesondere nicht ferromagnetisch. Eine zumindest in Teilbereichen magnetisch und/oder ferromagnetisch ausgestaltete Speicherleuchtstoffplatte wird aufgrund magnetischer Kräfte von den im Inneren des Walzenhohlkörpers befindlichen Magnete zum Walzenhohlkörper hin angezogen, so dass die bei einem Kontakt zwischen der Speicherleuchtstoffplatte und dem Walzenhohlkörper auftretenden Reibungskräfte gegenüber einer Walze ohne zusätzliche Magnete im Inneren deutlich erhöht werden. Bei einer Rotation der Walze wird die mit dieser in Kontakt stehende Speicherleuchtstoffplatte mit entsprechend erhöhter Zuverlässigkeit befördert. Gegenüber Beförderungseinrichtungen, bei welchen die Speicherleuchtstoffplatte zwischen zwei rotierenden Walzen geklemmt wird, um von diesen zuverlässig befördert zu werden, kann hierbei auf eine zweite Walze verzichtet werden.

Insgesamt wird durch die Erfindung der Vorteil eines vereinfachten Aufbaus bei gleichzeitig zuverlässigem Plattentransport erzielt.

Erfindungsgemäß ist im Inneren der Walze ein Träger vorgesehen, welcher sich in Richtung der Rotationsachse der Walze erstreckt und an welchem die Magnete angeordnet sind. Hierdurch lassen sich die Magnete auf einfache und zuverlässige Weise im Inneren der Walze anordnen.

Der Träger ist um eine Längsachse drehbar gelagert, welche im Wesentlichen parallel zur Rotationsachse der Walze verläuft oder mit der Rotationsachse der Walze zusammenfällt. Dadurch wird erreicht, dass der Träger bzw. die Magnete unabhängig vom Walzenhohlkörper gedreht werden kann bzw. können.

Hierbei ist durch die Drehstellung des Trägers ein Bereich am äußeren Umfang der Walze wählbar, in welchem ein gegenüber dem übrigen äußeren Umfang der Walze größeres Magnetfeld auftritt, so dass ein ferromagnetischer Körper, insbesondere eine Speicherleuchtstoffplatte, bei Kontakt mit diesem Bereich am äußeren Umfang der Walze von der Walze angezogen wird. Durch die jeweilige Drehstellung des Trägers kann also der Bereich am äußeren Umfang der Walze gewählt werden, an welchem die Reibungskräfte bei einem Kontakt zwischen der Speicherleuchtstoffplatte und der Walze am größten sind. Durch die Wahl der Drehstellung des Trägers bzw. der Magneten kann auf einfache und präzise Weise eingestellt werden, ob die Speicherleuchtstoffplatte bei Kontakt mit der rotierenden Walze befördert wird (Magnete möglichst nahe an der Kontaktstelle) oder nicht befördert wird (Magnete möglichst weit entfernt von der Kontaktstelle).

Es ist außerdem bevorzugt, dass der Träger stabförmig, insbesondere mit einem rechteckigen oder quadratischen Querschnitt, ausgebildet ist. Dadurch lassen sich die oben beschriebenen Funktionalitäten des Trägers auf einfache und zuverlässige Weise realisieren.

Vorzugsweise ist der Träger oder zumindest ein Abschnitt des Trägers ferromagnetisch ausgebildet. Beispielsweise besteht der Träger oder ein Abschnitt des Trägers aus Eisen oder einer ferromagnetischen Eisenlegierung. Die Befestigung der Magnete am Träger erfolgt hierbei bereits aufgrund der magnetischen Anziehungskräfte zwischen den Magneten und dem Träger, so dass auf weitere Befestigungsmittel, z.B. Klebstoff, Halterungen, Schrauben oder Nieten, verzichtet werden kann. Gleichwohl können zusätzliche Befestigungsmittel vorgesehen sein, um eine besonders sichere Befestigung zu gewährleisten.

Vorzugsweise sind die Magnete an einem, insbesondere parallel zur Rotationsachse der Walze sich erstreckenden, Seitenbereich des Trägers angeordnet. Die Anordnung der Magnete im Innern des Walzenhohlkörpers sowie die Wahl der jeweiligen Stellung bzw. Position der Magnete wird hierdurch auf besonders einfache und zuverlässige Weise realisiert.

Die im Inneren der Walze vorgesehenen Magnete können beispielsweise als Elektromagnete ausgebildet sein. Elektromagnete haben den hierbei Vorteil, dass ihre magnetische Felder bei Bedarf aus- bzw. eingeschaltet werden können. Vorzugsweise werden als Magnete aber Permanentmagnete verwendet, so dass auf zusätzliche Vorkehrungen, wie z.B. die bei Elektromagneten erforderlichen elektrischen Leitungen, verzichtet werden kann, was den Aufbau weiter vereinfacht.

Bei einer bevorzugten Ausgestaltung besteht die als Hohlkörper ausgebildete Walze aus einem nicht-ferromagnetischen Material, insbesondere aus Aluminium. Ein nicht-ferromagnetisches Material im Sinne der Erfindung ist hierbei ein diamagnetisches oder paramagnetisches Material mit einer relativen magnetischen Permeabilität nahe bei dem Wert 1, insbesondere zwischen etwa 0,99 bis 1,01, welches ein Magnetfeld nur leicht schwächen bzw. leicht verstärken kann. Dadurch werden hohe magnetische Flussdichten im Bereich der Walzenhülle und folglich hohe Reibungskräfte im Kontaktbereich zwischen der Speicherleuchtstoffplatte und der Walze gewährleistet, wodurch ein zuverlässiger Transport sichergestellt wird.

Eine weitere vorteilhafte Weiterbildung sieht vor, dass der äußere Umfangsbereich der Walze mit einer die Reibung erhöhenden Beschichtung, insbesondere aus Gummi oder Kunststoff, versehen ist. Hierdurch werden die aufgrund der magnetischen Anziehungskräfte bereits erhöhten Reibungskräfte zwischen Speicherleuchtstoffplatte und Walze noch weiter erhöht, was den Transport der Speicherleuchtstoffplatte noch zuverlässiger macht.

Bei einer weiteren bevorzugten Ausgestaltung der Erfindung weist die Beförderungseinrichtung eine Entnahmeeinheit auf, welche mit der Speicherleuchtstoffplatte gekoppelt werden kann und zumindest in einem Teilbereich ferromagnetisch ist, so dass die Entnahmeeinheit, gegebenenfalls zusammen mit der damit gekoppelten Speicherleuchtstoffplatte, bei einem Kontakt mit der rotierenden Walze durch diese befördert werden kann. Vorzugsweise ist die Entnahmeeinheit zur Entnahme und/oder Rückführung der in einer Ausgangsposition, insbesondere in einer Kassette, befindlichen Speicherleuchtstoffplatte aus der bzw. in die Ausgangsposition ausgebildet. Die, zumindest in Teilbereichen ferromagnetische, Entnahmeeinheit und die Walze sind so angeordnet, dass diese in Kontakt miteinander kommen können und die Entnahmeeinheit durch die rotierende Walze befördert werden kann. Durch die Walze kann somit indirekt - d.h. über die Entnahmeeinheit - auch eine Entnahme und/oder Rückführung der Speicherleuchtstoffplatte aus der bzw. in die Ausgangsposition, insbesondere Kassette, vorgenommen werden, ohne dass es hierzu eines weiteren Antriebs für die Entnahmeeinheit bedarf.

Alternativ oder zusätzlich ist die Beförderungseinrichtung zum Transportieren der Speicherleuchtstoffplatte relativ zur Ausleseeinrichtung, insbesondere an der Ausleseeinrichtung vorbei, ausgebildet. Die Walze ist hierbei vorzugsweise nahe, insbesondere unterhalb, der Ausleseeinrichtung angeordnet, so dass möglichst die gesamte Speicherleuchtstoffplatte die Ausleseeinrichtung durchlaufen und von dieser ausgelesen werden kann. Auf zusätzliche Antriebs- oder Beförderungsmittel zum Transport der Platte an der Ausleseeinrichtung vorbei kann dadurch verzichtet werden. Eine Positionierung der Walze unterhalb der Ausleseeinrichtung, insbesondere unterhalb einer durch den abgelenkten Stimulationslichtstrahl beschriebenen Linie, hat darüber hinaus den Vorteil, dass die an der Walze anliegende Speicherleuchtstoffplatte ein hohes Maß an Ebenheit aufweist, wodurch die in der Speicherleuchtstoffplatte gespeicherten Röntgeninformationen besonders zuverlässig ausgelesen werden können.

Bei einer bevorzugten Ausgestaltung der erfindungsgemäßen Speicherleuchtstoffplatte ist an der ferromagnetischen Schicht, insbesondere in deren Randbereich, mindestens ein zusätzlicher ferromagnetischer Bereich vorgesehen. Hierdurch sind die bei einer magnetischen Kopplung zwischen der Beförderungseinrichtung, insbesondere der Entnahmeeinheit, und der Speicherleuchtstoffplatte auftretenden magnetischen Anziehungskräfte in der Umgebung des ferromagnetischen Bereichs, insbesondere im Randbereich der ferromagnetischen Schicht, besonders groß. Die Entnahme, Beförderung bzw. Rückführung der Speicherleuchtstoffplatte wird dadurch besonders sicher.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: eine schematische Darstellung einer Vorrichtung zum Auslesen von Speicherleuchtstoffplatten;
- Fig. 2: eine perspektivische Darstellung eines Beispiels für eine Walze mit einem darin befindlichen Träger sowie eines vergrößerten Ausschnitts aus dem Träger;
- Fig. 3: einen Querschnitt durch eine Walze mit einem darin befindlichen Träger bei zwei unterschiedlichen Drehstellungen des Trägers;
- Fig. 4: einen Querschnitt eines erstes Beispiels einer Speicherleuchtstoffplatte;
- Fig. 5: einen Querschnitt eines zweiten Beispiels einer Speicherleuchtstoffplatte;
- Fig. 6: einen Querschnitt einer Entnahmeeinheit; und
- Fig. 7: a) bis d) jeweils eine perspektivische Darstellung (linker Teil) sowie eine Querschnittsdarstellung (rechter Teil) einer Beförderungseinrichtung in unterschiedlichen Phasen bei der Entnahme einer Speicherleuchtstoffplatte aus einer Kassette.

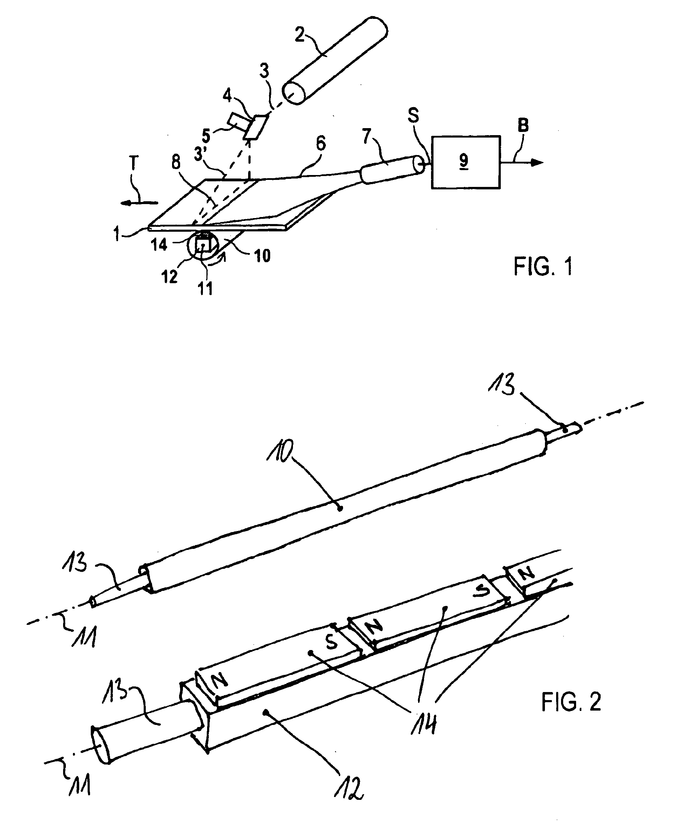

Figur 1 zeigt eine Auslesevorrichtung zum Auslesen einer Speicherleuchtstoffplatte 1. Durch einen Laser 2 wird ein Stimulationslichtstrahl 3 erzeugt, welcher durch ein Ablenkelement 4 derart abgelenkt wird, dass sich dieser entlang einer Zeile 8 über die auszulesende Speicherleuchtstoffplatte 1 bewegt. Das Ablenkelement 4 weist eine reflektierende Fläche, insbesondere in Form eines Spiegels, auf, welche durch eine Antriebseinrichtung 5 in Oszillation versetzt wird. Alternativ kann das Ablenkelement 4 einen Polygonspiegel aufweisen, welcher durch die Antriebseinrichtung 5, in diesem Fall ein Motor, in Rotation versetzt wird und den Stimulationslichtstrahl 3 über die Speicherleuchtstoffplatte 1 lenkt.

Während der Bewegung des abgelenkten Stimulationslichtstrahls 3' über die Speicherleuchtstoffplatte 1 sendet diese in Abhängigkeit der darin gespeicherten Röntgeninformation Emissionslicht aus, welches von einer optischen Sammeleinrichtung 6, beispielsweise einem Lichtleiterbündel oder einer geeigneten Spiegeleinrichtung, gesammelt und von einem optischen Detektor 7, vorzugsweise einem Photomultiplier (PMT), erfasst und dabei in ein entsprechendes Detektorsignal S umgewandelt wird.

Das Detektorsignal S wird einer Einrichtung 9 zugeführt, in welcher digitale Bildsignalwerte B für einzelne Bildpunkte des ausgelesenen Röntgenbildes abgeleitet werden.

Durch eine Beförderung der Speicherleuchtstoffplatte 1 in Transportrichtung T mittels einer Beförderungseinrichtung wird ein sukzessives Auslesen einzelner Zeilen 8 der Speicherleuchtstoffplatte 1 erreicht und damit ein zweidimensionales, aus einzelnen Bildpunkten mit jeweils einem zugehörigen Bildsignalwert B zusammengesetztes Röntgenbild erhalten.

Die Beförderungseinrichtung umfasst im gezeigten Beispiel eine Walze 10, die durch einen Walzenantrieb (nicht dargestellt) in Rotation um eine Rotationsachse 11 versetzt wird. Die Speicherleuchtstoffplatte 1 liegt mit ihrer Unterseite auf der Walze 10 auf und wird aufgrund des hierbei auftretenden Reibschlusses durch die Rotation der Walze 10 in Richtung T befördert.

Die hierbei auftretenden Reibungskräfte zwischen der Speicherleuchtstoffplatte 1 und der Walze 10 werden im gezeigten Beispiels dadurch wesentlich erhöht, dass die Speicherleuchtstoffplatte 1, welche zumindest in Teilbereichen permanentmagnetisch oder ferromagnetisch ist, durch magnetische Kräfte zur Walze 10 hin gezogen wird. Die hierbei erforderlichen magnetischen Felder werden von einem oder mehreren Permanentmagneten 14 erzeugt, welche auf einem im Innern der Walze 10 verlaufenden Träger 12 angeordnet sind. Die Walze 10 und der Träger 12 sind hierbei so gelagert bzw. angeordnet, dass die Drehstellung des Trägers 12 unverändert bleibt, während die Walze 10 in der durch einen Pfeil angedeuteten Rotationsrichtung um ihre Rotationsachse 11 rotiert. Dadurch ist das von dem bzw. den Permanentmagneten 14 erzeugte Magnetfeld im oberen Bereich der Walze 10, auf welchem die Speicherleuchtstoffplatte 1 aufliegt, am größten. In diesem Bereich werden die Reibungskräfte zwischen Speicherleuchtstoffplatte 1 und Walze 10 signifikant erhöht, was eine zuverlässige Beförderung der Speicherleuchtstoffplatte in Transportrichtung T ermöglicht.

Figur 2 zeigt ein Beispiel für eine Walze 10 mit einem im Inneren der Walze 10 befindlichen Träger, von welchem lediglich dessen Lagerabschnitte 13 zu sehen sind (oberer Teil der Figur), sowie einen vergrößerten Ausschnitt aus dem Träger 12 (unterer Teil der Figur) jeweils in perspektivischer Darstellung.

Bei der Walze 10 handelt es sich vorzugsweise um einen Hohlkörper, beispielsweise ein Rohr, aus einem nicht-ferromagnetischen Stoff, beispielsweise Aluminium oder Kunststoff. Der äußere Umfang der Walze 10 ist vorzugsweise in der Weise ausgestaltet, dass die bei einem Kontakt zwischen der Speicherleuchtstoffplatte 1 und der Walze 10 auftretenden Reibungskräfte möglichst hoch sind. Dies wird beispielsweise durch eine Gummibeschichtung oder eine Kunststoffbeschichtung erreicht. Die Walze 10 ist über nicht dargestellte Lager in der Vorrichtung drehbar gelagert und wird durch einen geeigneten Walzenantrieb in Rotation versetzt.

Der im Inneren der Walze 10 befindliche Träger 12 weist an beiden Enden jeweils einen Lagerabschnitt 13 auf, über welchen er in der Vorrichtung gelagert ist. Der Träger 12 ist hierbei um seine Längsachse drehbar gelagert, wobei über die Wahl der jeweiligen Drehstellung des Trägers 12 festgelegt werden kann, in welchem Umfangsbereich der Walze 10 die magnetischen Anziehungskräfte am größten sind. Vorzugsweise verlaufen die Drehachse des Trägers 12 sowie die Rotationsachse 11 der Walze 10 koaxial, d.h. die beiden Achsen stimmen überein. Alternativ kann vorgesehen sein, dass die Drehachse des Trägers 12 parallel zur Rotationsachse 11 der Walze 10 verläuft.

Im dargestellten Beispiel weist der Träger 12 einen stabförmigen Abschnitt mit quadratischem Querschnitt auf, wobei entlang einer Seite des stabförmigen Abschnitts mehrere Permanentmagnete 14 angeordnet sind. Vorzugsweise ist der stabförmige Abschnitt des Trägers 12 ferromagnetisch, so dass die Permanentmagnete 14 bereits durch magnetische Anziehungskräfte zuverlässig am Träger 12 gehalten werden. Zusätzlich oder - falls der stabförmige Abschnitt des Trägers 12 nicht ferromagnetisch ist - alternativ können die Permanentmagnete 14 auch mittels eines geeigneten Klebstoffs oder anderer Befestigungsmittel am Träger 12 befestigt werden.

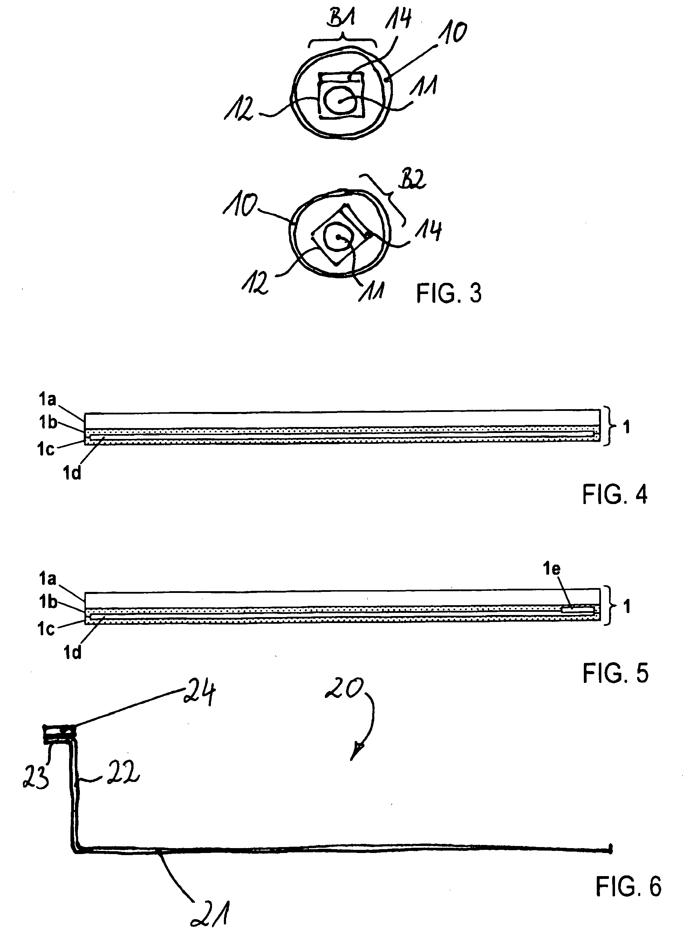

Figur 3 zeigt einen Querschnitt durch eine Walze 10 mit einem darin befindlichen Träger 12 bei zwei unterschiedlichen Drehstellungen des Trägers 12.

In der im oberen Teil der Figur gezeigten Drehstellung des Trägers 12 ist das von den Magneten 14 ausgehende Magnetfeld in einem oberen Umfangsbereich B1, welcher parallel zur Rotationsachse 11 der Walze 10 verläuft, am größten. Eine im Bereich B1 aufliegende Speicherleuchtstoffplatte (vgl. Figur 1) mit ferromagnetischen Eigenschaften wird dann - zusätzlich zur Schwerkraft - durch hohe magnetische Kräfte zur Walze 10 hin gezogen.

Dem gegenüber ist bei der im unteren Teil der Figur gezeigten Drehstellung des Trägers 12 das Magnetfeld in einen um etwa 45° verschobenen Umfangsbereich B2 entlang der Walze 10 am größten. Dementsprechend ist bei dieser Drehstellung das Magnetfeld im oberen Umfangsbereich im Vergleich zu der im oberen Teil der Figur gezeigten Drehstellung wesentlich geringer. Entsprechend geringer sind bei dieser Drehstellung folglich die magnetischen Anziehungskräfte und demzufolge die Reibungskräfte zwischen einer im Bereich B1 aufliegenden Speicherleuchtstoffplatte 1 und der Walze 10.

Dies bedeutet, dass durch die Wahl der Drehstellung des Trägers 12 und der darauf befindlichen Magnete 14 gezielt eingestellt werden kann, ob beispielsweise eine im oberen Umfangsbereich B1 der Walze 10 aufliegende Speicherleuchtstoffplatte 1 bei einer Rotation der Walze 10 befördert wird (oberer Teil der Figur) oder von der Walze 10 freigegeben werden soll (unterer Teil der Figur), beispielsweise bei einer Rückführung der Speicherleuchtstoffplatte 1 in eine bereitgestellte Kassette.

Figur 4 zeigt einen Querschnitt eines ersten Beispiels einer Speicherleuchtstoffplatte 1 mit einer Speicherleuchtstoffschicht 1 a, welche auf einer Trägerschicht aufgebracht ist. Die Trägerschicht weist im dargestellten Beispiel eine ferromagnetische Schicht 1d auf, welche von zwei nicht-ferromagnetischen Schichten 1 b und 1 c umgeben ist.

Bei der ferromagnetischen Schicht 1d handelt es sich vorzugsweise um eine Stahlfolie mit einer Dicke zwischen etwa 0,01 mm und 0,1 mm, vorzugsweise von etwa 0,05 mm. Bei den beiden nicht-ferromagnetischen Schichten 1 b und 1 c handelt es sich vorzugsweise um Kunststofffolien. Vorzugsweise werden hierbei Folien aus Polyester verwendet, durch welche ein besonders guter Reibschluss zwischen der Unterseite der Speicherleuchtstoffplatte 1 und der Walze 10 erreicht wird. Dies gilt insbesondere dann, wenn der äußere Umfang der Walze 10 mit einer Gummibeschichtung versehen ist.

Ein besonders zuverlässiger Reibschluss wird hierbei insbesondere dann erzielt, wenn die Gummibeschichtung der Walze 10 mit Nitril-Butadien-Kautschuk (NBR) erfolgt. Vorzugsweise wird hierbei die äußere Oberfläche der Walze 10 mit einer Kautschuk- bzw. Rohgummischicht versehen, beispielsweise durch Ummanteln oder Bandagieren, welche anschließend bei Temperaturen von vorzugsweise mehr als 120°C vulkanisiert wird. Die auf diese Weise beschichtete Walze 10 wird nachbehandelt, indem die Gummioberfläche vorzugsweise durch Schleifen auf Maß gebracht und/oder geglättet wird. Hierdurch wird ein hohes Maß an Ebenheit erreicht, so dass die auf der gummibeschichteten Walze 10 laufende Speicherleuchtstoffplatte 1 praktisch ruck- und/oder erschütterungsfrei transportiert werden kann.

Wie aus der Figur ersichtlich ist, ist die Flächenausdehnung der ferromagnetischen Schicht 1d kleiner als die Ausdehnung der beiden nicht-ferromagnetischen Schichten 1 b und 1 c. Dadurch wird erreicht, dass die ferromagnetische Schicht 1d auch im Randbereich von den nicht-ferromagnetischen Schichten 1b und 1c umgeben ist und somit sowohl mechanisch als auch klimatisch, beispielsweise gegen Korrosion, geschützt ist.

Die Schichten 1b, 1c und 1d werden vorzugsweise durch Laminieren miteinander verbunden. Vorzugsweise wird hierbei ein sogenannter Heißkleber verwendet, welcher bei Zimmertemperatur fest ist und erst bei Erwärmung eine Klebewirkung entfaltet.

Bei der beschriebenen Ausführung ist es möglich, die ferromagnetische Schicht 1d in der bereits angegebenen Weise sehr dünn zu machen, ohne zu große Abstriche an die mechanische Stabilität der Trägerschicht zu machen. Gleichzeitig erlaubt der beschriebene Aufbau der Trägerschicht eine äußerst leichte Ausgestaltung derselben, was zur Folge hat, dass diese aufgrund ihres wesentlich geringeren Gewichts bei eventuellen Stürzen erheblich weniger belastet wird als konventionelle Speicherleuchtstoffplatten. Die Gefahr von Beschädigungen der Trägerschicht selbst und/oder der darauf befindlichen Speicherleuchtstoffschicht 1 a wird auf diese Weise erheblich reduziert.

Figur 5 zeigt einen Querschnitt eines zweiten Beispiels einer Speicherleuchtstoffplatte 1. Zusätzlich zu den bereits anhand von Figur 4 erläuterten Schichten ist bei der hier dargestellten Ausführung im Randbereich der ferromagnetischen Schicht 1d ein zusätzlicher ferromagnetischer Bereich 1e vorgesehen.

Der zusätzliche ferromagnetische Bereich 1e hat beispielsweise die Form eines Streifens, welcher entlang eines Randbereichs der ferromagnetischen Schicht 1 b (in diesen Falle senkrecht zur Figurenebene) verläuft. Bei dem Bereich 1e handelt es sich vorzugsweise, wie bei der ferromagnetischen Schicht 1d, um ein dünnes Stahlblech mit einer typischen Dicke zwischen etwa 0,01 mm und 0,1 mm.

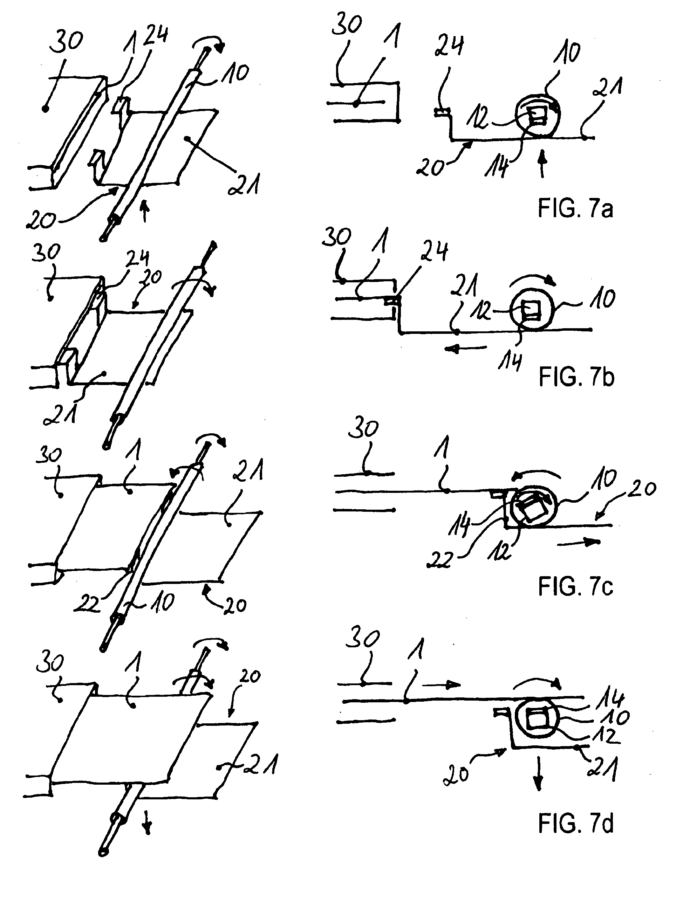

Durch den zusätzlichen ferromagnetischen Bereich 1e wird erreicht, dass die durch ein äußeres Magnetfeld hervorgerufenen magnetischen Anziehungskräfte in diesem Bereich der Speicherleuchtstoffplatte 1 gegenüber den übrigen Bereichen der Speicherleuchtstoffplatte 1 deutlich erhöht sind. Dies ist insbesondere dann von besonderem Vorteil, wenn die Speicherleuchtstoffplatte 1 beim sogenannten Handling aus einer Ausgangsposition, vorzugsweise aus einer Kassette, entnommen und/oder wieder in diese zurückgeführt werden soll. Durch den zusätzlichen magnetischen Bereich 1e im Randbereich der Speicherleuchtstoffplatte 1 wird hierbei erreicht, dass ein in diesem Bereich von außen angreifender Magnet mit besonders hohe Anziehungskraft an die Speicherleuchtstoffplatte 1 ankoppeln kann und diese entsprechend zuverlässig führen kann. Dies wird anhand der Figuren 6 und 7 beispielhaft näher erläutert.

Figur 6 zeigt den Querschnitt einer Entnahmeeinheit 20 mit einer im Wesentlichen ebenen ferromagnetischen Grundplatte 21, einem im Wesentlichen senkrecht zur Grundplatte 21 verlaufenden Seitenbereich 22 sowie einen an einem Vorsprung 23 des Seitenbereichs 22 angeordneten Magneten 24, vorzugsweise einem Permanentmagneten.

Die Figuren 7a bis 7d zeigen jeweils eine perspektivische Darstellung (linker Figurenteil) sowie eine Querschnittsdarstellung (rechter Figurenteil) der in Figur 6 gezeigten Entnahmeeinheit 20 bei der Entnahme einer Speicherleuchtstoffplatte 1 aus einer Kassette 30 in unterschiedlichen Phasen.

In der in Figur 7a dargestellten Phase befindet sich die Speicherleuchtstoffplatte 1 im Inneren der Kassette 30. Die Walze 10 und die Entnahmeeinheit 20 sind so angeordnet, dass ein unterer Bereich der Walze 10 die ferromagnetische Grundplatte 21 der Entnahmeeinheit 20 kontaktieren kann. Die Drehstellung des in der Walze 10 befindlichen Trägers 12 mit dem darauf befindlichen Magneten 14 ist hierbei so gewählt, dass das von den Magneten 14 ausgehende magnetische Feld im unteren Umfangsbereich der Walze 10, d.h. im Kontaktbereich zwischen Walze 10 und Grundplatte 21 der Entnahmeeinheit 20, am größten ist.

Durch einen entsprechenden Walzenantrieb wird die Walze 10 in Rotation in Richtung der gebogenen Pfeile versetzt, so dass die Entnahmeeinheit 20 durch die Walze 10 in Richtung der Kassette 30 befördert wird.

Vorzugsweise ist die Grundplatte 21 der Entnahmeeinheit 20 mit einem gewissen Spiel in vertikaler Richtung gelagert, so dass sich die Grundplatte 21 von der Walze 10 nach unten wegbewegen kann, wenn die auf dem Träger 12 befindlichen Magnete 14 nach oben zeigen, und die Grundplatte 21 von der Walze 10 angezogen werden kann (siehe rechter Teil der Figur 7a), wenn die auf dem Träger 12 befindlichen Magnete 14 nach unten gerichtet sind.

In der in Figur 7b gezeigten Phase hat der an dem Vorsprung 23 des Seitenbereichs 22 (siehe Figur 6) der Grundplatte 21 der Entnahmeeinheit 20 angebrachte Magnet 24 eine Seitenkante der Speicherleuchtstoffplatte 1 erreicht und koppelt an diese aufgrund magnetischer Anziehungskräfte an. Die Speicherleuchtstoffplatte 1 ist hierbei vorzugsweise in der im Zusammenhang mit den Figuren 4 und 5 gezeigten Weise ausgestaltet. Insbesondere weist die ferromagnetische Schicht 1 d (siehe Figur 5) in dem Randbereich, an welchem der Magnet 24 an die Speicherleuchtstoffplatte 1 magnetisch ankoppelt, einen zusätzlichen magnetischen Bereich 1e auf.

Nach dem magnetischen Ankoppeln der Entnahmeeinheit 20 an die Speicherleuchtstoffplatte 1 wird die Rotationsrichtung der Walze 10 umgekehrt, ohne dass die Drehstellung des Trägers 12 und der darauf befindlichen Magnete 14 gegenüber den in Figuren 7a und 7b gezeigten Phasen geändert wird. Dies hat zur Folge, dass die Entnahmeeinheit 20 zusammen mit der daran angekoppelten Speicherleuchtstoffplatte 1 in der entgegengesetzten Richtung befördert wird, so dass die Speicherleuchtstoffplatte 1 aus der Kassette 30 herausbefördert wird.

Bei der in Figur 7c gezeigten Phase ist dieser Vorgang bereits so weit fortgeschritten, dass der Seitenbereich 22 der Entnahmeeinheit 20 an der Walze 10 anliegt und eine weitere Beförderung der Entnahmeeinheit 20 in dieser Richtung nicht mehr möglich ist. In dieser Situation wird nun der in der Walze 10 befindliche Träger 12 in eine Drehstellung gebracht, in welcher die darauf befindlichen Magnete 14 auf einen oberen Bereich der Walze 10, welcher dem führenden Rand der Speicherleuchtstoffplatte 1 an nächsten ist, hin ausgerichtet sind. Dies ist im rechten Teil der Figur 7c dargestellt. Dadurch verringern sich die Reibungskräfte zwischen der Walze 10 und der Entnahmeeinheit 20 wesentlich, während die magnetischen Anziehungskräfte im oberen Bereich der Walze 10 deutlich zunehmen, so dass bei einer erneuten Umkehr der Rotationsrichtung der Walze 10 nunmehr eine magnetische Kopplung zwischen der Speicherleuchtstoffplatte 1 und der Walze 10 erfolgt und die Speicherleuchtstoffplatte 1 weiter aus der Kassette 30 heraus befördert wird.

Figur 7d zeigt eine Phase, in welcher der in der Walze 10 befindliche Träger 12 derart ausgerichtet ist, dass das von den auf dem Träger 12 befindlichen Magneten 14 erzeugte Magnetfeld genau im Bereich des Kontakts zwischen der beförderten Speicherleuchtstoffplatte 1 und der Walze 10 am größten ist. Entsprechend hoch sind die Reibungskräfte zwischen Walze 10 und Speicherleuchtstoffplatte 1, so dass ein zuverlässiger Transport der Speicherleuchtstoffplatte 1 aus der Kassette 30 heraus gewährleistet wird.

Aufgrund der Drehstellung des Trägers 12 einschließlich der darauf befindlichen Magneten 14 wird die Grundplatte 21 der Entnahmeeinrichtung 20 nicht mehr von der Walze 10 angezogen, so dass die mit einem vertikalen Spiel gelagerte Entnahmeeinrichtung 20 etwas nach unten fällt (siehe vertikaler Pfeil in der Figur 7d). Durch die rotierende Walze 10 wird dann nur noch die Speicherleuchtstoffplatte 1 befördert, vorzugsweise an der Zeile 8 (siehe Figur 1) im Bereich der Ausleseeinrichtung vorbei, während die Entnahmeeinrichtung 20 liegen bleibt und für einen nachfolgenden Rücktransport der Speicherleuchtstoffplatte 1 in die Kassette 30 zur Verfügung steht.

Beim Rücktransport laufen die obenstehend beschriebenen Schritte in umgekehrter Reihenfolge ab, bis die ausgelesene Speicherleuchtstoffplatte 1 wieder in die Kassette 30 zurückgeführt ist.

## Patentansprüche

1. Vorrichtung zum Auslesen von in einer Speicherleuchtstoffplatte (1) gespeicherten Röntgeninformationen mit
einer Ausleseeinrichtung (2, 4 - 7) zum Bestrahlen der Speicherleuchtstoffplatte (1) mit Stimulationslicht (3, 3') und zum Erfassen von hierbei in der Speicherleuchtstoffplatte (1) angeregtem Emissionslicht und
einer Beförderungseinrichtung (10, 20) zur Beförderung der Speicherleuchtstoffplatte (1) mit mindestens einer Walze (10), welche in Rotation um ihre Rotationsachse (11) versetzt werden kann, wobei im Inneren der als Hohlkörper, insbesondere als Hohlzylinder, ausgebildeten Walze (10) ein oder mehrere Magnete (14), insbesondere Permanentmagnete, angeordnet sind, **dadurch gekennzeichnet, dass** im Inneren der Walze (10) ein Träger (12) vorgesehen ist, welcher sich in Richtung der Rotationsachse (11) der Walze (10) erstreckt und an welchem die Magnete (14) angeordnet sind, wobei der Träger (12) um eine Längsachse drehbar gelagert ist, welche im Wesentlichen parallel zur Rotationsachse (11) der Walze (10) verläuft oder mit der Rotationsachse (11) der Walze (10) zusammenfällt, wobei durch die Drehstellung des Trägers (12) ein Bereich (B1, B2) am äußeren Umfang der Walze (10) wählbar ist, in welchem ein gegenüber dem übrigen äußeren Umfang der Walze (10) größeres Magnetfeld auftritt, so dass ein ferromagnetischer Körper bei Kontakt mit diesem Bereich (B1, B2) am äußeren Umfang der Walze zu der Walze (10) hingezogen wird.

2. Vorrichtung nach Anspruch 1, wobei der Träger (12) stabförmig, insbesondere mit einem rechteckigen oder quadratischen Querschnitt, ausgebildet ist.

3. Vorrichtung nach einem der Ansprüche 1 oder 2, wobei der Träger (12) oder zumindest ein Abschnitt des Trägers (12) ferromagnetisch ist.

4. Vorrichtung nach einem der vorangehenden Ansprüche, wobei die Magnete (14) an einem, insbesondere parallel zur Rotationsachse (11) der Walze (10) sich erstreckenden, Seitenbereich des Trägers (12) angeordnet sind.

5. Vorrichtung nach einem der vorangehenden Ansprüche, wobei die als Hohlkörper ausgebildete Walze (10) aus einem nicht-ferromagnetischen Material, insbesondere aus Aluminium, besteht.

6. Vorrichtung nach einem der vorangehenden Ansprüche, wobei der äußere Umfangsbereich der Walze (10) mit einer die Reibung erhöhenden Beschichtung, insbesondere aus Gummi oder Kunststoff, versehen ist.

7. Vorrichtung nach einem der vorangehenden Ansprüche, wobei die Beförderungseinrichtung (10, 20) eine Entnahmeeinheit (20) aufweist, welche mit der Speicherleuchtstoffplatte (1), insbesondere magnetisch, gekoppelt werden kann und zumindest in einem Teilbereich (21) ferromagnetisch ist, so dass die Entnahmeeinheit (20), gegebenenfalls zusammen mit der damit gekoppelten Speicherleuchtstoffplatte (1), bei einem Kontakt mit der rotierenden Walze (10) durch diese befördert werden kann.

8. Vorrichtung nach Anspruch 7, wobei die Entnahmeeinheit (20) zur Entnahme und/oder Rückführung der Speicherleuchtstoffplatte (1) aus einer bzw. in eine Ausgangsposition, insbesondere aus einer bzw. in eine Kassette (30), ausgebildet ist.

9. Vorrichtung nach einem der vorangehenden Ansprüche, wobei die Beförderungseinrichtung (10, 20) zum Transportieren der Speicherleuchtstoffplatte (1) relativ zur Ausleseeinrichtung (2, 4 - 7), insbesondere an der Ausleseeinrichtung (2, 4 - 7) vorbei, ausgebildet ist.

10. System zum Auslesen von in einer Speicherleuchtstoffplatte gespeicherten Röntgeninformationen mit einer Speicherleuchtstoffplatte (1) mit einer Trägerschicht (1b, 1 c, 1 d) und einer auf der Trägerschicht (1b, 1 c, 1 d) befindlichen Speicherleuchtstoffschicht (1a),
**dadurch gekennzeichnet, dass**
eine Vorrichtung nach einem der vorangehenden Ansprüche vorgesehen ist und
zumindest ein Teilbereich der Trägerschicht (1b, 1c, 1d) der Speicherleuchtstoffplatte (1) ferromagnetisch ist.

11. Speicherleuchtstoffplatte (1) mit einer Trägerschicht (1b, 1c, 1d) und einer auf der Trägerschicht (1 b, 1 c, 1 d) befindlichen Speicherleuchtstoffschicht (1 a),
**dadurch gekennzeichnet, dass**
die Trägerschicht (1b. 1 c, 1 d) der Speicherleuchtstoffplatte (1) eine ferromagnetische Schicht (1d) sowie zwei nicht-ferromagnetische Schichten (1 b, 1 c), insbesondere zwei Kunststoffschichten, aufweist, wobei die ferromagnetische Schicht (1d) zwischen den beiden nicht-ferromagnetischen Schichten (1 b, 1 c) liegt und an der ferromagnetischen Schicht (1d), insbesondere in deren Randbereich, mindestens ein zusätzlicher ferromagnetischer Bereich (1e) vorgesehen ist.

## Claims

1. A device for reading out X-ray information stored in a storage phosphor plate (1), comprising
a read-out device (2, 4 - 7) for irradiating the storage phosphor plate (1) with stimulating light (3, 3') and for detecting emission light which is thereby stimulated in the storage phosphor plate (1) and
a transport device (10, 20) for transporting the storage phosphor plate (1), comprising at least one roller (10) which can be put into rotation about its rotational axis (11), wherein one or more magnets (14), in particular permanent magnets, are arranged on the inside of the roller (10) which is formed as a hollow body, in particular as a hollow cylinder, **characterized in that** the inside of the roller (10) is provided with a support (12) which extends in the direction of the rotational axis (11) of the roller (10) and on which the magnets (14) are arranged, wherein the support (12) is rotatably mounted around a longitudinal axis which runs substantially parallel to the rotational axis (11) of the roller (10) or which coincides with the rotational axis (11) of the roller (10), wherein the rotational position of the support (12) allows selecting an area (B1, B2) on the outside circumference of the roller (10) in which a magnetic field occurs which is larger than the remaining outside circumference of the roller (10) so that a ferromagnetic body is attracted to the roller (10) when contacting this area (B1, B2) on the outside circumference of the roller (10).

2. The device according to claim 1, wherein the support (12) has the form of a bar, in particular with a rectangular or square cross-section.

3. The device according to any one of the claims 1 or 2, wherein the support (12) or at least a section of the support (12) is ferromagnetic.

4. The device according to any one of the preceding claims, wherein the magnets (14) are arranged on a side area of the support (12) which in particular extends parallel to the rotational axis (11) of the roller (10).

5. The device according to any one of the preceding claims, wherein the roller (10) having the form of a hollow body is composed of a non-ferromagnetic material, in particular aluminum.

6. The device according to any one of the preceding claims, wherein the outer circumferential area of the roller (10) is provided with a friction-enhancing coating, in particular made of rubber or plastic.

7. The device according to any one of the preceding claims, wherein the transport device (10, 20) comprises a removal unit (20) which can be coupled to the storage phosphor plate (1), in particular magnetically, and which is ferromagnetic at least in a partial area (21) so that the removal unit (20), optionally together with the storage phosphor plate (1) coupled thereto, can be transported by the rotating roller (10) when coming into contact with it.

8. The device according to claim 7, wherein the removal unit (20) is designed for the removal and/or return of the storage phosphor plate (1) respectively from and into an initial position, in particular from respectively into a cassette (30).

9. The device according to any one of the preceding claims, wherein the transport device (10, 20) is designed for transporting the storage phosphor plate (1) relative to the read-out device (2, 4 - 7), in particular past the read-out device (2, 4 - 7).

10. System for reading out X-ray information stored in a storage phosphor plate, comprising a storage phosphor plate (1) having a base layer (1b, 1c, 1d) and a storage phosphor layer (1a) applied to the base layer (1b, 1c, 1d),
**characterized in that**
a device according to any one of the preceding claims is provided and
at least a partial area of the base layer (1b, 1c, 1d) of the storage phosphor plate (1) is ferromagnetic.

11. Storage phosphor plate (1) comprising a base layer (1b, 1c, 1d) and a storage phosphor layer (1a) applied to the base layer (1b, 1c, 1d),
**characterized in that**
the base layer (1b, 1c, 1d) of the storage phosphor plate (1) comprises a ferromagnetic layer (1d) and two non-ferromagnetic layers (1b, 1c), in particular two plastic layers, wherein said ferromagnetic layer (1d) is located between both non-ferromagnetic layers (1b, 1c) and at least one additional ferromagnetic area (1e) is provided on the ferromagnetic layer (1d), in particular in its edge portion.

## Revendications

1. Dispositif destiné à la lecture d'informations radiographiques stockées dans une plaque luminescente à mémoire (1), ledit dispositif comprenant
un dispositif de lecture (2, 4 - 7) destiné à irradier la plaque luminescente à mémoire (1) avec de la lumière de stimulation (3, 3') et à capter la lumière d'émission stimulée dans la plaque luminescente à mémoire (1) lors de cette irradiation, et
un dispositif de transport (10, 20) destiné à transporter la plaque luminescente à mémoire (1) et comprenant au moins un rouleau (10) pouvant être déplacé rotativement autour de son axe de rotation (11), un ou plusieurs aimants (14), en particulier des aimants permanents, étant disposés à l'intérieur du rouleau (10) ayant la forme d'un corps creux, en particulier d'un cylindre creux, caractérisé en que le côté intérieur du rouleau (10) est pourvu d'un support (12) qui s'étend dans le sens de l'axe de rotation (11) du rouleau (10) et sur lequel sont disposés les aimants (14), ledit support (12) étant monté de façon rotative autour d'un axe longitudinal qui s'étend essentiellement de façon parallèle à l'axe de rotation (11) du rouleau (10) ou qui coïncide avec l'axe de rotation (11) du rouleau (10), la position rotationnelle du support (12) permettant de sélectionner une zone (B1, B2) sur la circonférence extérieure du rouleau (10) dans laquelle est généré un champ magnétique qui est plus large que la superficie restante de la circonférence extérieure du rouleau (10) de sorte qu'un corps ferromagnétique est attiré vers le rouleau (10) lorsqu'il entre en contact avec ladite zone (B1, B2) sur la circonférence extérieure du rouleau (10).

2. Dispositif selon la revendication 1, **caractérisé en ce que** le support (12) est réalisé sous forme d'une barre présentant en particulier une section transversale rectangulaire ou carrée.

3. Dispositif selon l'une quelconque des revendications 1 ou 2, **caractérisé en ce que** le support (12) ou au moins une partie du support (12) est ferromagnétique.

4. Dispositif selon l'une quelconque des revendications précédentes, **caractérisé en ce que** les aimants (14) sont disposés dans une zone latérale du support (12) qui, en particulier, s'étend parallèlement à l'axe de rotation (11) du rouleau (10).

5. Dispositif selon l'une quelconque des revendications précédentes, **caractérisé en ce que** le rouleau (10) ayant la forme d'un corps creux est composé d'un matériau non ferromagnétique, en particulier d'aluminium.

6. Dispositif selon l'une quelconque des revendications précédentes, **caractérisé en ce que** la zone circonférentielle extérieure du rouleau (10) est pourvue d'un revêtement augmentant la friction, réalisé en particulier en caoutchouc ou en plastique.

7. Dispositif selon l'une quelconque des revendications précédentes, **caractérisé en ce que** le dispositif de transport (10, 20) comprend une unité de prélèvement (20) pouvant être couplée, en particulier de façon magnétique, à la plaque luminescente à mémoire (1) et étant ferromagnétique au moins dans une zone partielle (21) de sorte que l'unité de prélèvement (20), le cas échéant avec la plaque luminescente à mémoire (1) couplée à celle-ci, peut être transportée par le rouleau en rotation (10) lorsqu'elle entre en contact avec celui-ci.

8. Dispositif selon la revendication 7, **caractérisé en ce que** l'unité de prélèvement (20) est construite de façon à prélever la plaque luminescente à mémoire (1) d'une position initiale et/ou à l'y ramener, en particulier à la prélever d'une cassette (30) et/ou à l'y ramener.

9. Dispositif selon l'une quelconque des revendications précédentes, **caractérisé en ce que** le dispositif de transport (10, 20) est construit de façon à transporter la plaque luminescente à mémoire (1) par rapport au dispositif de lecture (2, 4 - 7), en particulier devant le dispositif de lecture (2, 4 - 7).

10. Système pour la lecture d'informations radiographiques stockées dans une plaque luminescente à mémoire, comprenant une plaque luminescente à mémoire (1) comprenant une couche de support (1b, 1c, 1d) et une couche luminescente à mémoire (1a) appliquée sur la couche de support (1b, 1c, 1d),
**caractérisé en ce que**
il est prévu un dispositif selon l'une quelconque des revendications précédentes et
au moins une zone partielle de la couche de support (1b, 1c, 1d) de la plaque luminescente à mémoire (1) est ferromagnétique.

11. Plaque luminescente à mémoire (1) comprenant une couche de support (1b, 1c, 1d) et une couche luminescente à mémoire (1a) appliquée sur la couche de support (1b, 1c, 1d),
**caractérisée en ce que**
la couche de support (1b, 1c, 1d) de la plaque luminescente à mémoire (1) comprend une couche ferromagnétique (1d) ainsi que deux couches non ferromagnétiques (1b, 1c), en particulier deux couches en plastique, ladite couche ferromagnétique (1d) étant située entre les deux couches non ferromagnétiques (1b, 1c) et au moins une zone ferromagnétique supplémentaire (1e) étant prévue sur la couche ferromagnétique (1d), en particulier dans la zone de bord de celle-ci.
